Europäisches Patentamt

European Patent Office

Office européen des brevets

(19)

(11) Publication number: **0 300 306**
**A2**

(12)

# EUROPEAN PATENT APPLICATION

(21) Application number: 88111025.8

(22) Date of filing: 11.07.88

(51) Int. Cl.⁴: **A47J 37/12 , A47J 37/04**

(30) Priority: 22.07.87 IT 292887

(43) Date of publication of application:
**25.01.89 Bulletin 89/04**

(84) Designated Contracting States:
**AT BE CH DE ES FR GB IT LI NL SE**

(71) Applicant: **ALGA DI GIUDICI ANGELAMARIA & C. S.n.c.**
**Via Broseta, 59**
**I-24100 Bergamo(IT)**

(72) Inventor: **Giudici, Angelamaria**
**Via Broseta, 59**
**I-24100 Bergamo(IT)**
Inventor: **Giavazzi, Lucio**
**Via Broseta, 59**
**I-24100 Bergamo(IT)**
Inventor: **Giavazzi, Giancarlo**
**Via Broseta, 59**
**I-24100 Bergamo(IT)**

(74) Representative: **Luksch, Giorgio, Dr.-Ing. et al**
**Ing. A. Giambrocono & C. S.r.l. Via Rosolino Pilo, 19/b**
**I-20129 Milano(IT)**

(54) **Fryer with drum rotating about a horizontal axis.**

(57) A fryer, particularly for domestic use, is characterised by a metal mesh drum closed in the manner of a cage for containing the food to be fried, and rotatable about a horizontal axis. Said drum is associated with supports which guide its rotation and which enable it to be raised relative to the level of the frying oil and to be completely extracted from the interior of a box-shaped pan in which the oil is contained and heated.

The drum is rotated by the insertion therein of a drive nosepiece provided with raised portions for its keyed engagement and implementing this function with the aid of a thrust spring. Said drive nosepiece is normally in a position of engagement with the drum but is disengagable therefrom by a lever which when moved compresses said spring and operates a microswitch for stopping the electric motor. This lever is associated with means for retaining it in the position in which it disengages the drive nosepiece and stops the electric motor.

Fig.1

## FRYER WITH DRUM ROTATING ABOUT A HORIZONTAL AXIS

The invention relates to the field of fryers, and in particular domestic fryers.

The known problems connected with food frying includes the large oil consumption and poor frying uniformity of the food pieces. An attempt has been made to solve these problems by using fryers with a drum rotating about an oblique axis.

However, these fryers do not completely satisfy market requirements because of a number of problems connected with oil drainage from the food, operational safety, oil recovery and the poor frying quality due to limited or no stirring of the food.

An object of the present invention is to provide a fryer which uses a very low ratio of oil to the quantity of food to be fried.

A further object is to provide food stirring in a safe and abundant manner during its frying.

A further object is to provide a fryer which allows oil to be drained after frying without causing excessive cooling of the fried food.

A further object is to provide a fryer in which the danger of scalding on pouring off the oil or on opening the box-shaped pan containing the food drum is reduced.

These and further objects which will be apparent on reading the description given hereinafter are attained by a fryer characterised by a metal mesh drum of cage form for containing the food to be fried. and rotatable about a horizontal axis, said drum being associated with supports which guide its rotation and which enable it to be raised relative to the frying oil level and to be completely extracted from the interior of a box-shaped pan in which the oil is contained and heated.

The invention is illustrated by way of non-limiting example on the accompanying drawings in which:

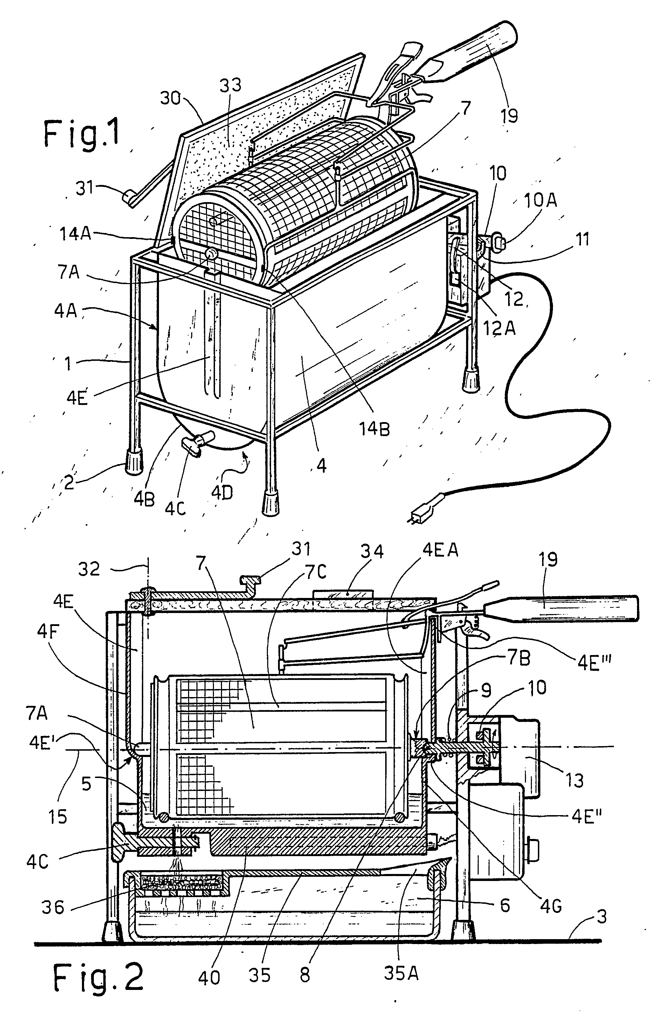

Figure 1 is a perspective view of a fryer with its outer support structure shown in skeleton form in order to better display its internal parts, this figure showing the drum in a partly extracted position;

Figure 2 is a side view of a fryer partly sectioned on a middle vertical longitudinal plane;

Figure 3 is a middle vertical longitudinal section through a drum showing the various lever systems used for the raising relative to the frying oil level;

Figure 4 is a perspective view of one embodiment of a drum.

With reference to the aforesaid figures, an outer support structure is represented by a framework 1 provided with feet 2 for its resting on usual domestic working tops 3. The structure 1 supports a box-shaped pan 4 provided with parallel side walls 4A, a semicylindrical base 4B, and a cock or plug 4C for closing a base hole 4D used for completely discharging the frying oil 5 into an underlying collection tray 6.

The box-shaped pan 4 is provided with two opposing vertical channels 4E and 4EA for guiding the central vertical movement of a drum 7 provided with projections 7A and 7B. These projections enable the drum to rest on the base $4E'$ and $4E''$ of the two vertical channels 4E. Of the two projections 7A and 7B, the projection 7A acts only as a pivot for rotation on the base $4E'$ of the corresponding channel 4E, whereas the projection 7B also receives in its central cavity a driving nosepiece 8 provided with teeth, raised portions or other means for rotating said projection 7B and thus the drum 7 with which it is rigid.

The drive nosepiece 8 normally projects into the vertical channel in which it is located, under the action of a spring 9. This means that the nosepiece can only undergo its insertion engagement with the projection 7B after having been retracted by overcoming the contrasting action of the spring 9.

The drive nosepiece 8 is preferably made to undergo this displacement outwards from the pan by the action of a first order lever 10. The end 10A of this lever is normally in a position separated from the outer framework 1 because of the thrust exerted in the opposite direction (on its portion lying beyond the fulcrum) by the nosepiece thrust spring 9. In this position, the fryer is operative not only because said position enables the drive nosepiece to engage the projection 7B but also because an electric motor 13 is activated by the action of a feeler 12 connected to a microswitch.

The electric motor 13, for which an orientative position is shown in the figure, is associated with a normal reduction gear, preferably of worm type.

The drum 7 is provided with an end door 14 through which the food to be fried is inserted. This door retains the food inside the drum 7 while this latter rotates about its axis 15.

In this respect the door 14 is provided with friction means which secure it to the cylindrical body of the drum. These means preferably consist of a side hinge 14A and an elastic press latch 14B in a diametrically opposite position. This facility for securely locking the food inside the drum has the advantage that the drum can be filled to a considerable degree and the food totally recovered as there is no possibility of it falling onto the bottom of the box-shaped pan 4. The degree to which the drum 7 can be filled is conditioned only by the requirement for stirring the food pieces as these can undergo stirring during drum rotation only if free space exists for their cyclic falling.

The drum 7 is essentially cylindrical and is constructed by curving either a variously perforated metal sheet or a strong stainless steel mesh 7Z.

The steel mesh 7Z is fixed to two end rings 16A and 16B, which are possibly joined together by at least one longitudinal member to give them greater geometrical rigidity.

The two rings 16A and 16B are provided with a circumferential groove 16C of semicircular cross-section for housing two rod portions 18A and 18B shaped as a semicircle to support the drum 7 and allow it to rotate about their common axis 15. These rings are provided with diametrical bars 16D carrying the pivots 7A and 7B.

The semicircular cross-section of the grooves 16C also allows axial engagement between the rod portions 18A, 18B and the drum 7, which is particularly useful during drum extraction.

In this respect, said rod portions are connected by longitudinal elements 18D and central vertical uprights 18E, 18E' to an articulated structure for handling the drum.

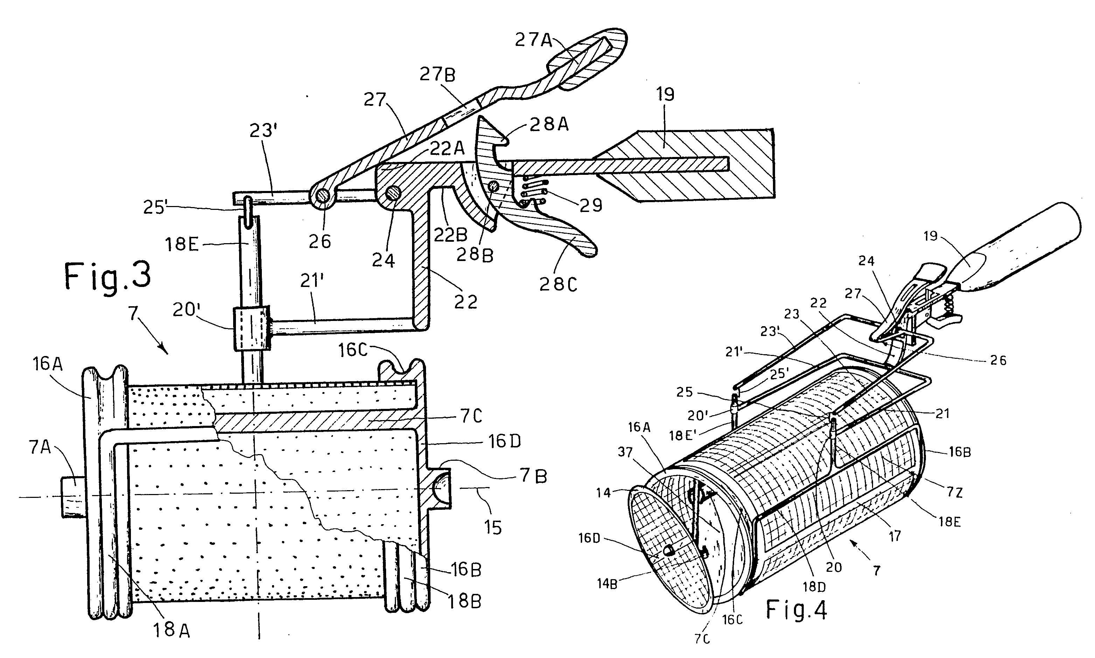

Figure 3 shows the particular type of connection between the handle 19 and the drum 7.

The vertical uprights 18E, 18E' are in a central or rather barycentric position about the drum 7.

They are guided during vertical sliding motion by bushes 20, 20' positioned at the end of rods 21, 21' which are rigid with the handle 19 and are of such a shape as to extend essentially external to the overall outline of the drum 7, to facilitate its possible disengagement. The rods 21 join together at a central element 22 terminating in the handle 19.

This central element 22 carries pivoted in a hole 24 thereon two parallel third order levers 23 and 23' connected to the ends of the vertical uprights 18E, 18E' by normal links or connecting hooks 25, 25'. The levers 23, 23' are joined together by an intermediate pivot 26 which engages with a first order lever 27 pivoted by resting slidably on the top 22A of the element 22. When the free end 27A of the lever 27 is pushed down by the thumb of the hand which grips the handle 19, the levers 23, 23' rotate about the axis of the hole 24, so lowering the lever 27 until its slot 27B is engaged by a hooking tooth 28A. This tooth forms the end of a further first order lever pivoted by a pin 28B to the central element 22 and kept in a position of engagement by a spring 29.

In this manner, by pressing the end 28C of this lever in the manner of a trigger by the index finger of the hand gripping the handle 19, the opposing action of the spring 29 is overcome and the lever 27 is released from the tooth 28A. Consequently the weight of the drum causes the levers 23 and 23' to descend so causing the uprights 18E and 18E' to move downwards, together with the drum supported by them, by a required extend defined by the projections 7A and 7B making contact with the bases 4E' and 4E'' of the channels 4E, 4EA.

The reference position about which these operations take place is the position determined by a cavity 22B in the central element 22 resting on the top edge 4E''' of the channel 4EA. This resting can only be done at the end comprising the channel 4EA, its purpose being to facilitate the engagement between the drum projection 7B and the drive nosepiece 8. For this purpose, the two sides 4F and 4G of the pan 4 are different at the top of their channels 4E, 4EA, so that only the side 4G allows the recess 22B to be received.

To make the stirring of the food pieces more efficient during frying, the drum 7 is provided with an eccentric bar 7C fixed to the radial bar 16D of the ring 16B provided at the end comprising the handgrip 19. To enable the drum 7 to stir delicately as could be necessary for crumbly foods such as fish fillets, it is divided in half by a wall 37 supported and rotated by being fitted into said bar 7C.

Given the small quantity of oil required for frying, the described fryer allows the oil to be contained in either of two separate specific containers, in one of which the frying takes place and in the other of which any already used oil is stored for use in further frying on a subsequent day. In this respect, a frying pan such as the box-shaped pan 4 is preferably of aluminium construction because of its high thermal conduction, which is necessary to quickly distribute the heat absorbed from the usual resistance heating elements 40 provided on the base of the pan 4. However, the chemical affinity between aluminium and frying oils is well known, thus making it unhygienic to maintain prolonged contact between these substances and requiring the oil to be transferred into generally glass containers. Thus, advantageously the described fryer comprises in addition to its box-shaped frying pan 4 a collection tray 6 which is located below this latter and is constructed of glass or another material suitable for the prolonged storage of frying oil. Transfer from the upper pan 4 to the lower tray 6 takes place by merely opening a bottom cock 4C, and thus no dangerous handling of boiling oil is required.

When the oil is poured back from the collection tray 6 into the box-shaped pan 4 it is already cold. This pouring is made possible by making provision for the collection tray 6 to be extracted from its position below the box-shaped frying pan.

The tray 6 is constructed of heat-resistant glass and is closed upperly by a rubbery plastic cover 35 shaped to removably hold a filter 36 onto which the oil falls, so as to improve its preservation. The oil is poured out of this collection tray through normal shaped openings 35A in the cover 35.

This fryer can comprise all the usual electrical and electronic devices for controlling and displaying the oil temperature, the time of the frying operation and its operating conditions.

## Claims

1. A fryer, particularly for domestic use, characterised by a metal mesh drum (7Z) closed in the manner of a cage (7) for containing the food to be fried, and rotatable about a horizontal axis (15).

2. A fryer as claimed in claim 1, characterised by a drum (7) associated with supports (7A, 7B) which guide its rotation and which enable it to be raised relative to the level of the frying oil (5) and to be completely extracted from the interior of a box-shaped pan (4) in which the oil is contained and heated (40).

3. A fryer as claimed in claim 1, characterised in that the drum (7) is rotated by the insertion therein of a drive nosepiece (8) provided with raised portions for its keyed engagement and implementing this function with the aid of a thrust spring (9).

4. A fryer as claimed in claim 3, characterised by a drive nosepiece (8) which is normally in a position of engagement with the drum (7) but disengagable therefrom by a lever (10) which when displaced compresses said spring (9) and operates (12) a microswitch (12A) for stopping the electric motor (13), said lever (10) being associated with means (11) for retaining it in the position in which it disengages the drive nosepiece (8) and stops the electric motor (13).

5. A fryer as claimed in claim 2 comprising supports (7A, 7B) which guide its rotation (15) and enable it to be lifted, characterised by a handle (19) covering the end of a central element (22) which branches into two lateral rods (21, 21') terminating with bushes (20, 20') in which there vertically slide vertical uprights (18E, 18E') which can be raised by virtue of their coupling (25, 25') to the end of a third order lever (23, 23') pivoted (24) to the central element (22) and operated (26) by a central first order lever (27) which has a slidable fulcrum (22A) and can be moved at its other end (27A) by the thumb of the hand until it becomes retained by a tooth (28A), said tooth (28A) pertaining to a first order lever operable at its remote end (28C) to disengage the tooth (28A) by overcoming the opposing action of a spring (29).

6. A fryer as claimed in claim 1, characterised by a drum (7) provided with a lateral hinged door (14) comprising a retention latch (14B).

7. A fryer as claimed in claim 1, characterised by a drum (7) provided with a stirring bar (7C) which can be associated with a dividing wall (37) the purpose of which is to reduce the violence of the stirring operating by reducing the height through which the food pieces fall during the rotation of the drum (7).

8. A fryer as claimed in claim 1, characterised by comprising a collection tray (6) of heat-resistant glass, said tray comprising a soft plastic cover (35) associated with a removable filter (35) which receives the oil (5), and having usual shaped portions (35A) to facilitate its pouring back into the box-shaped pan (4).

9. A fryer as claimed in claim 1, characterised by a laterally-hinged rectangular cover (30) (Figure 1) associated with an operating handgrip (32) having its arm pivoted (32) on the cover (30) so that it can be moved outwards away from the box-shaped pan.

10. A fryer as claimed in claim 1, characterised by a bottom hole (4D) for discharging the frying oil into a collection tray (6) and closed by a cock or other transfer means.

Fig.1

Fig.2

Fig.3

Fig.4